# EUROPEAN PATENT APPLICATION

(11) **EP 2 306 763 A1**
(43) Date of publication of application: **06.04.2011**
(21) Application number: 09306002.8
(22) Date of filing: 22.10.2009
(51) Int. Cl.: H04W 24/02, H04W 16/10

(54) **Method for adaptation of resources in a radio communication system, network node, and radio communication system thereof**

(30) Priority: 02.10.2009 EP 09305937
(71) Applicant: Alcatel Lucent, 75008 Paris (FR)
(72) Inventor: Karla, Ingo, 46514, Schermbeck (DE)
(74) Representative: Wetzel, Emmanuelle

(57) **Abstract**

The invention relates to a method for adaptation of resources in a radio communication system, wherein the method comprises the step of determining (M4) at least one first spectra radio resource for a first radio cell of the radio communication system and of least one second spectral radio resource for at least one second radio cell of the radio communication system based on at least one cell load related parameter, and wherein the method further comprises the steps of allocating (M7) the at least one first spectral radio resource to the first radio cell, if the at least one first spectral radio resource is different to an allocated at least one further first spectral radio resource of the first radio cell and/or allocating (M7) the at least one second spectral radio resource to the at least one second radio cell, if the at least one second spectral radio resource is different to on allocated at least one further second spectral radio resource of the at least one second radio cell. The invention further relates to a network node and to a radio communication system.

## Description

### FICLD OF THE INVENTION

The invention relates to a method for adaptation of resources in a radio communication system according to the preamble of claim 1, to a network node according to the preamble of claim 10, and to a radio communication system comprising the network node.

### BACKGROUND

In future radio communication systems such as LTE (LTE = Long Term Evolution) self-organizing methods such as adaptation of resources will be managed between base stations such as eNodeBs (eNodeB = enhanced NodeS).

One of the SON requirements (SON = self-organizing network) is that radio cells or radio sectors of base stations of the SON will adapt itself to an interworking with neighbouring radio cells or radio sectors without external control by a network operator or by a central entity of a radio access network or of a core network of the radio communication system. For the adaptation of resources several load balancing mechanisms exist: By varying handover parameters, it can be determined for example at which received signal quality threshold a mobile station will make a handover from a source radio cell/sector to a target radio cell/sector. Simulations according to the variation of the handover parameters have shown, that in a radio access technology such as LTE there is only a limited range within which the handover parameters can be varied, because LTE does not benefit from a spreading code gain in comparison to further radio access technologies such as UMTS (UMTS = Universal Mobile Telecommunication Systems) or CDMA (CDMA = Code Division Multiple Access). Therefore, load balancing capabilities according to the variation of the handover parameter are in LTE rather limited and moderate. In interference limited scenarios, the variation of the transmission power of a radio cell/sector shifts the cell/sector border between the adjacent radio cells/Sectors and thereby increases or shrinks a cell/sector size, This allows balancing the load between the adjacent radio cells/sectors until a desired traffic load distribution among the adjacent radio cells/sectors is achieved. The transmission power variation affects the cell/sector borders of a radio cell/sector towards all of its neighbouring radio cells/sectors. Thus, the variation of the transmission power causes a more complex coupling according to the load balancing between several radio cells/sectors in comparison to a variation of the handover parameters, where only the cell/sector border towards one single neighbouring radio cell/sector is affected via determination of for example a cell/sector individual handover offset value.

The variation of the transmission power can influence a cell/sector coverage situation, There is a risk to create somewhere a coverage hole when reducing the transmission power of a radio cell/sector Furthermore, the variation of the transmission power is preferably used for radio access technologies with a large radio cell/sector overlap such as in CDMA cellular networks, which are using a spreading code gain. While the variation of the transmission power is a valid mechanism in CDMA networks, the mechanism seems to be not so well suitable for radio access technologies such as LTE.

ICIC (ICIC = Inter Cell Interference Coordination) is a spectral radio resource coordination among several radio cells/sectors of a cellular radio communication system with a frequency reuse of 1. Thereby, radio cell/sector edge performance is limited by ititer-cell interference (or inter-sector interference).

A request/grant method is a dynamic ICIC mechanism and is based on a broadcasted request being sent by an overloaded radio cell/sector to several or all neighbouring radio cells/sectors to dispense some of their own spectral radio resources. A neighbouring radio cell/sector having for example one or several unused spectral radio resources in an area towards the overloaded radio cell/secfor can for example lower its transmission power for the one or the several unused spectral radio resources and schedules mobile stations with the one or the several spectral radio resources only in a centre of the neighbouring radio cell/sector.

A coordination of radio resources among radio cells/sectors on a TTI level (TTI = Transmission Time Interval) is a further dynamic ICIC mechanism with a very short time frame (milliseconds), wherein for example a scheduler of a master radio cell/sector is a first to allocate spectral radio resources such as an PRB (PRB = physical resource block) in LTE, which is not used by an adjacent radio cell/sector to reduce interference, for one or several TTIs_{.} Then, the master radio cell/sector sends an indication for the remaining time and spectral radio resources to a first one of slave radio cells/sectors. The first one of the slave radio cells/sectors allocates further time and spectral radio resources for the one or the several TTIs. This goes on until a last one of the slave radio cells/sectors has allocated even further time and spectral radio resources for the one or the several TTIS. Thereby, the inter-cell or the inter-sector interference can be avoided or kept as low as possible, This dynamic approach requires very fast computations at base stations of the radio cells/sectors, requires a large signalling load between adjacent radio cells/sectors or between adjacent base stations, and requires very fast signalling with very low delay.

The way of performing resource adaptation in radio communication systems affects capabilities of network nodes of the radio communication system and of the radio communication system.

Therefore, it is an object of the invention to provide an improved resource adaptation method for network nodes of a radio communication system.

### SUMMARY

The object is achieved by a method for adaptation of resources in a radio communication system, wherein the method comprises the step of determining at least one first spectral radio resource for a first radio cell of the radio communication system and at least one second spectral radio resource for at least one second radio cell of the radio communication system based on at least one cell load related parameter, and wherein the method further comprises the steps of allocating the at least one first spectral radio resource to the first radio cell, if the at least one first spectral radio resource being different to an allocated at least one further first spectral radio resource of the first radio cell and/or allocating the at least one second spectral radio resource to the at least one second radio cell, if the at least one second spectral radio resource being different to an allocated of least one further second spectral radio resource of the at least one second radio cell.

The object is further achieved by a network node according to an independent claim 10 and by a radio communication system comprising the network node.

The invention provides a first benefit of reducing interference between radio cells, which may be caused by on overload in one or several radio cells. Thereby, an improved inter-cell interference coordination can be achieved. In addition, the invention offers a second benefit of providing a load balancing between the radio cells by exchanging spectral radio resources, if a load situation changes in one or several of the radio cells due to a changed traffic load, e.g. caused by changed user service demands, due to mobility of users between the radio cells, or due to a changed number of users in the radio cells. Furthermore, one or several mobile stations being connected to the first radio cell and the at least one second radio cell can be offered an improved QoS (QoS = quality of service) with higher data rates, lower delay etc. Also, the overall data throughput of the radio communication system can be increased.

In an embodiment of the invention, the determining step is performed for at least one subarea of the first radio cell and/or the at least one second radio cell, This provides an advantage of accelerating the determining step by considering less cell load related parameters or less working parameters such as handover parameters, transmission power parameters, cell reselection parameters because one or several subareas of the radio cells for example in an overlapping area of adjacent radio cells have less adjacent radio cells than one or several whole radio cells. By reducing a number of input parameters for the determining step a complexity of an algorithm for the determining step can be decreased and thereby a time frame for providing a solution by the determining step can be decreased. In a further embodiment of the invention, the determining step is further based on at least one working parameter and wherein the at least one working parameter is either of the following: handover parameter, transmission power parameter, cell reselection parameter. This provides a first advantage of providing a more detailed description of a current load situation in the first and the at least one second radio cell. An improved allocation of one or several spectral radio resources to the first and the ai least one second radio cell according to the current bad situation is a second advantage.

In an even further embodiment of the invention, the method further comprises the step of detecting a change of the at least one cell load related parameter during the determining step and wherein the determining step is continued using the changed at least one cell load related parameter, This provides a first benefit of instantaneously applying the changed at least one cell load related parameter for example in remaining sub-steps of an algorithm of the determining step. Thereby, the determining step can be accelerated because it is not required to cancel and restart the determining step or to finish and restart the determining step for using the changed at least one cell load related parameter. The even further embodiment provides a second benefit of reducing processing load at a network node executing the determining step.

In a preferred embodiment of the invention, at least one first value of at least one first working parameter is used at the first radio cell and at least one second value of at least one second working parameter is used at the at least one second radio cell, the determining step further determines at least one further first value of the at least one first working parameter and/or at least one further second value of the at least one second working parameter, and the method further comprises the step of adapting the at least one first working parameter with the at least one further first value, if the at least one further first value is different to the at least one first value and/or adapting the at least one second working parameter with the at least one further second value, if the at least one further second value is different to the of least one second value and wherein the at least one first working parameter and the at least one second working parameter are either of the Mowing type: transmission power parameter, handover parameter, cell reselection parameter. This provides a benefit of an improved adaptation of one or several radio resource parameters and one or several further working parameters to the current load situation. Thereby, interference may be further decreased, load may be balanced in a further improved way, mobile stations may be offered a further improved QoS, and the overall data throughput of the radio communication system may be further increased.

In a further preferred embodiment of the invention, the determining step determines in a first sub-step the at least one first spectral radio resource and the at least one second spectral radio resource and in at least one second sub-step the at least one further first val ue and/or the at least one further second value or determines in the first sub-step the at least one further first value and/or the at least one further second value and in the at least one second sub-step the at least one first spectral radio resource and the at least one second spectral radio resource. This provides an advantage of further reducing for example the complexity of the algorithm of the determining step by varying for example in an iterative optimization algorithm in the-first sub-step one or several parameters of the spectral radio resources or one or several of the values of the working parameters and in the at least one second sub-step the one or the several of the values of the working parameters or the one or the several parameters of the spectral radio resources. Thereby, a complexity of the iterative optimization algorithm may be decreased and a solution of the determining step may be obtained in a shorter time frame to allow for a faster adaptation of the resources. Thereby, also a computational effort and a power consumption can be reduced.

In even further preferred embodiments of the invention, the at least one cell load related parameter is either of the following: radio capacity parameter, radio load parameter, processing capacity parameter, processing load parameter, network load parameter, used spectral radio resource, unused spectral radio resource. This provides an advantage of adapting resources according to different load situations such as an overload of radio resources of the first radio cell and/or the at least one second radio cell, an overload of processing resources in a network node such as a base station of the radio communication system, or an overload of communication links between network nodes.

In another embodiment of the invention, the method further comprises the steps of transmitting to the first radio cell a first message for allocating the at least one first spectral radio resource or deallocating the at least one further first spectral radio resource, and/or transmitting to the at least one second radio cell at least one second message for allocating the at least one second spectral radio resource or deallocating the at least one further second spectral radio resource, and operating the first radio cell with the allocated at least one first spectral radio resource, and/or operating the at least one second radio cell with the allocated at least one second spectral radio resource.

This provides a first benefit of distributing or exchanging spectral radio resources and preferably also working parameters between the first radio cell and one or several second radio cells to avoid interference, or keep interference as lowes possible. According to a second benefit, a further determining step at one or several network nodes of the first radio cell and/or the at least one second radio cell is not required, which can reduce computational effort at the one or the several network nodes and therefore can reduce energy consumption at the one or the several network nodes. In yet another embodiment of the invention, the method further comprises the steps of transmitting a third message with information of the allocated at least one first spectral radio resource or the deallocated at least one further first spectral radio resource from the first radio cell to at least one further radio cell, and/or transmitting a fourth message with information of the allocated at least one second spectral radio resource or the deallocated at least one further second spectral radio resource from the at least one second radio cell to the at least one further radio cell. Thereby, the at least one further radio cell becomes aware of changes of radio resources in the first radio cell and/or the at least one second radio cell. The information will be used of the at least one further radio cell in its operation to avoid interference or to keep interference as low as possible between the at least one further radio cell and the first radio cell and/or the at least one second radio cell.

In further preferred embodiments of the invention, the method may be performed in a distributed way or in a centralized way. The centralized way provides a benefit of a simpler update of the method for the adaptation of the resources because only one or a few network nodes of the radio communication need to be updated. The distributed way provides an advantage of distributing a calculation effort for the adaptation of the resources in the radio communication system across network nodes and thereby a single point of failure can be avoided. Furthermore, a distributed method may be independent of a size of the network.

In further embodiment of the invention, the network node for the adaptation of the resources in the radio communication system comprises means for determining the at least one first spectral radio resource for the first radio cell and the at least one second spectral radio resource for the at least one second radio cell based on the at least one cell load related parameter, and the network node further comprises means for allocating the at least one first spectral radio resource to the first radio cell, if the st least one first spectral radio resource is different to the allocated at least one further first spectral radio resource of the first radio cell and/or means for allocating the at least one second spectral radio resource to the at least one second radio cell, if the at least one second spectral radio resource is different to the allocated at least one further second spectral radio resource of the at least one second radio cell, wherein the network node is preferably a base station and wherein the network node further comprises the first radio cell and/or the at least one second radio cell. This provides a benefit of using the invention in base stations of the radio communication system. In a further improved embodiment of the invention, a predefined area of the radio communication system comprises the at least one second radio cell. The predefined area may be given for example by including all direct neighbouring radio cells of the first radio cell, by including direct neighbouring radio cells of one or several sub-areas of the first radio cell, or by including direct neighbouring radio cells and further direct neighbouring radio cells of the direct neighbouring radio cells.

In an even further improved embodiment of the invention, a number of the at least one second radio cell is below a predefined threshold. The predefined threshold may be given for example by including direct neighbouring radio cells up to a maximum total number of by depending on a sectorization level of a radio cell. For example, in case of a radio cell with four or more radio sectors the predefined threshold may be larger than in case of a radio cell with three or fewer radio sectors,

By limiting the area for the at least one second radio cell and/or by limiting the number of the at least one second radio cell a complexity of an algorithm of the determining step may be decreased by considering fewer input parameters such as cell load related parameters or working parameters. This provides an advantage of accelerating the determining step and a solution of the determining step may be obtained in a shorter time frame for a faster adaptation of the resources.

According to two further embodiments of the invention, the at least one first spectral radio resource and/or the at least one second spectral radio resource and/or the at least one first value of the at least one first working parameter and/or the at least one second value of the at least one second working parameter are determined with a value range or a value array. Using the value range or the value array provides a first benefit of allowing a network node of the first radio cell and/or the at least one second radio cell to adapt an application of the at least one first spectral radio resource and/or the at least one second spectral radio resource and/or the at least one first value of the at least one first working parameter and/or the at least one second value of the at least one second working parameter to small environment variations happened during the determining step or at the end of the determining step and thereby not requiring a new determining step, which reduces the computational effort. Futhermore, the value range or the value array provides a second benefit of resolving easily and in a fast way small conflict situations between the network node of the first radio cell and/or the at least one second radio cell and its further neighbouring network nodes.

Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows schematically a block diagram of a radio communication system according to a first embodiment of the invention.
Figure 2 shows schematically a block diagram of a radio cell according to a second embodiment of the invention.
Figure 3 shows schematically a block diagram of a method according to the first, the second, and further embodiments of the invention.
Figure 4 shows schematically a block diagram of a network node according to the first, the second, and the further embodiments of the invention.

### DESCRIPTION OF THE EMBODIMENTS

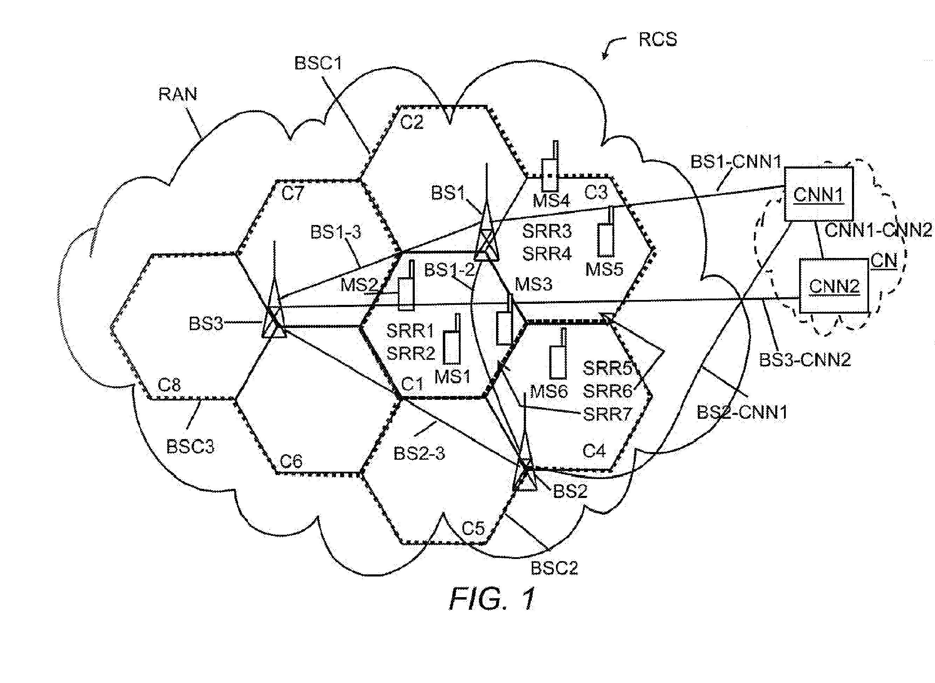

Figure 1 shows schematically in a block diagram a radio communication system RCS according to a first embodiment of the invention.

The radio communication system RCS comprises a radio access network PAN and may be a core network CN connected to the radio access network RAN. The core network CN may be connected to a further network such as the Internet (not shown). In an alternative, the radio access network RAN may be connected directly to the Internet.

The radio communication system PCS may be for example a 3GPP LTE network (3GPP = Third Generation Partnership Project) or a WLAN network (WLAN = Wireless Local Area Network).

The radio access network RAN comprises a first base station BS1, a second base station BS2, and a second base station BS3. The base station may be for example an enhanced NodeB of an LTE radio access network or an access point of a WLAN network. Further base stations are not shown for Simplification.

The first base station BS1 comprises three radio cells C1, C2, and C3. The second base station BS2 comprises two radio cells C4 and C5. The third base station BS1 comprises three radio cells C6, C7, and C8. In further alternatives, the base stations BS1, BS2, and BS3 may comprise only one radio cell or may comprise more than three radio cells. The radio cells are served by antenna systems of the base stations BS1, BS2, BS3 .

The radio cells C1 to C8 may be omni-directional radio cells or sectorized radio cells with two or more radio sectors. A radio sector is often designated as a radio cell. Therefore, a sectorized radio cell comprising for example three radio sectors can be administrated and handled as three radio cells according to the embodiments of the invention. This means according to Figure 1, that the radio cells C1, C2, C3 can be designated as radio sectors of a first base station radio cell BSC1, the radio cells C4, C5 can be designated as radio sectors of a second base station radio cell BSC2, and the radio cells C6, C7, C8 can be designated as radio sectors of a third base station radio cell BSC3.lndependent of the wording radio cell or radio sector, the invention may be used on a radio cell level (radio cell with one or more radio sectors) or on a radio sector level. For simplification, a following description is given for the radio cell level.

The base stations BS1, BS2, BS3 may be interconnected by inter-node connections BS1-2, BS1-3, and BS2-3 such as X2 interfaces between enhanced NodeBs in LTE. Further inter-node connections to further base stations are not shown for simplification.

The base stations BS1 and BS2 may be connected via core network connections BS1-CNN1 and BS2-CNN1 to a first core network node CNN1 of the core network CN and the third base station B53 may be connected via a core network connection BS3-CNN2 to a second core network node CNN2 of the core network CN. The core network connections 8S1 -CNN1, BS2-CNN1, and BS3-CNN2 may be for example S1 interfaces between enhanced NodeBs and MAAEs/S-GWs (MME = Mobility Management Entity, S-GW = Serving Gateway) used in LTE. The first and the second core network node CNN1 CNN2 may be for example mobility management entities, gateways to other networks, or operation and maintenance centres. Further core network connections between further base stations and the core network nodes CNN1, CNN2 or between further base stations and further core network nodes are not shown for simplification.

The first and the second core network node CNN1, CNN2 may be connected via an infra-core network connection CNN1-CNN2.

The radio access network RAN further comprises mobile stations MS1, MS2, and MS3 located in the first radio cell C1 and connected via first radio links to the first base station BS1, a fourth mobile station MS4 and a fifth mobile station MS5 located in the third radio cell C3 and connected via second radio links to the first base station BS1, and a sixth mobile station MS6 located in the fourth radio cell C4 and connected via a third radio link to the second base station BS2. Further mobile stations of the radio cells C1 to C8 are not shown for simplification.

The mobile stations MS1 to MS6 may be for example smartphones, handhelds, laptops, or any other transportable devices with radio interfaces, The term "mobile station" may be considered synonymous to a mobile unit, access terminal, user equipment, remote station, access terminal etc.

Services running at the mobile stations MS1 to MS6 such as video download, browsing, phoning or calling generate radio load in the radio cells C1, C32, C4 and also contribute to processing load in the base stations BS1 and BS2 and to user data load and/or signalling load on the inter-node connections BS1-2, BS1-3, BS2-3, the core network connections BS1-CNN1, BS2-CNN1, BS3-CNN2, and/or the intra-core network connection GNN1-CNN2. The generated radio load may produce interference in neighbouring radio cells C2, C5, C6, C7,

Algorithms preferably allocated to the radio cells C1, C2 C3, C4, C5, C6, C7, and/or C8 may perform independently in a distributed and self-organized way an adaptation of resources such as spectral radio resources SRR1, SRR2, SRR3, SRR4, SRR5, SRR6, SRR7 in the radio cells C1, C2, C3, C4, C5, C6, C7, and/or C8 or processing resources at the base stations BS1, BS2, and/or BS3 according to a current, dynamic load situation of the spectral radio resources SRR1 to SRR7 and/or the processing resources. One or several cell load related parameters such as radio capacity in megabit per second, radio load parameter in percent of a maximal radio load, network load such as user data load and/or signalling load in percent of a maximum load capacity on one or several of the inter-node connections BS1-2, BS1-3, BS2-3, the core network connections BS1-CNN1,BS2-CNN1, BS3-CNN2, and/or the intra-core network connection CNN1 -GNN2, processing capacity parameter such as CPU clock rate (CPU = central processing unit), MIPS (MIPS = Million of instructions per Second) or MFLOPS (MFLOP = Millions Floating points Operation per Second), processing load parameter in percent of a maximal processing load, used spectral radio resources SRR1 to SRR7, and/or unused spectral radio resources SRR1 to SRR7 may be used to determine the current, dynamic load situation and a working condition in the radio cells C1 to C8 of the base stations BS1 to BS3 and are used as input parameters for the algorithms of the radio cells.

The algorithms for the adaptation of the resources may be located in a distributed way at the base stations BS1, BS2, BS3. In an alternative, the algorithms for the adaptation of the resource may be located in centralized way at one or several of the core network nodes CNN1, CNN2 or at one or several further network nodes of the radio access network. For the adaptation of the resources of the radio cells C1 to C8 and/or the base stations BS1 to BS3, primarily cell load related parameters and/or working parameters of a radio cell itself and of a base station comprising the radio cell may be used as input parameters of for example an iterative algorithm. Preferably, also further input parameters of neighbouring radio cells and/or of direct neighbouring base stations may be used for the adaptation of the resources.

Exemplarily according to Figure 1, an algorithm of the first radio cell C1 of the first base station BS1 may use additionally to its own cell load related parameters and/or its own working parameters further cell load related parameters and/or working parameters of further radio cells of a predefined area at a location of the first radio cell C1. The predefined area may be given for example by including all direct neighbouring radio cells C2 to C7 of the first radio cell C1, by including direct neighbouring radio cells of one or several sub-areas of the first radio cell C1 or by including direct neighbouring radio cells C2 to C7 and further direct neighbouring radio cells C8 of the direct neighbouring radio cells.

Preferably, a number of the further radio cells is below a predefined threshold. The predefined threshold may be given for example by including direct neighbouring radio cells C2 to C8 up to a maximum total number of by depending on a sectorization level of a radio cell. For example, in case of a radio cell with four or more radio sectors the predefined threshold may be larger than in case of a radio cell with three or fewer radio sectors. Preferably, the predefined area and/or the predefined threshold may be adopted for example to a time frame - preferably a semi-static time frame of several seconds or minutes - in which the adaptation of the resources have to be performed to adapt the resources to the current, dynamic load situation.

The further and even further cell load related parameters and/or working parameters may be requested and/or reported via messages either between radio cells of a some base station in a base station internal way or between radio cells belonging to different base stations via the infer-node connections BS1-2, BS1-3, BS1-2, via the connections BS1-CNN1, BS2-CNN1, BS3-CNN2, and/or via the infra-core connection CNN1-CNN2. According to Figure 1, for example a resource adaptation algorithm of the first radio cell C1 may be triggered and performed by the first base station BS1 to overcome an overload situation in the first radio cell C1, which may be caused by user plane traffic of the mobile stations MS1 to MS3,

The first radio cell C1 is using allocated spectral radio resources SRR1, SRR2 The third radio cell C3 is using allocated spectral radio resout-ces SRR3, SRR4. The fourth radio cell C4 is using allocated spectral radio resources SRR5, SRR6, SRR7. An allocation of further spectral radio resources for the radio cells C2, C5, C6, C7, C8 is not shown for simplification.

The spectral radio resources SRR1 to SRR7 are non-overlapping frequency ranges such as PRBs (PRB = physical resource block) used in LTE of a predefined channel bandwidth such as 1.4 MHz or 20 MHz. In LTE for example, an OFDM subcarrier spacing in the frequency domain is 15kHz. Twelve adjacent OFDM subcarriers are called a PRB, which means that the PRB has a bandwidth of 180 kHz. 6 PRBs fit in a channel bandwidth of 1.4 MHz and 100 PRBs fit in a further channel bandwidth of 20 MHz.

The first radio cell C1 has besides its own load situation a knowledge that nearly all spectral radio resources of the third radio cell C3 are used for serving the mobile stations MS4, MS5 and that not all spectral radio resources of the fourth radio cell G4 are used for serving the mobile station MS6,

The first base station BS1 determines one or several spectral radio resources for example SRR1, SRR2, SRR7 for the first radio cell C1 and one or several spectral radio resources for example the spectral radio resources SRR3, SRR4, SRR6 for the radio cell C3 and the spectral radio resource SRR5 for the radio cell C4 for the radio cells C2 to C7 based on one or several cell load related parameter. The first base station BS1 allocates the spectral radio resource SRR1 , SRR2, SRR7 to the first radio cell C1, because it is different to the allocated spectral radio resources SRR1, SRR2, allocates the spectral radio resource SRR3, SRR4, SRR6 to the third radio cell C3, because it is different to the allocated spectral radio resources SRR3, SRR4, and allocates the spectral radio resource SRR5 to the fourth radio cell C4, because it is different to the allocated spectral radio resources SRR5, SRR6, SRR7.

In a preferred alternative, the first base station BS1 may further determine one or several values of one or several working parameters such as transmission power parameter, handover parameter, and/or cell reselection parameter of the first radio cell C1 and/or the direct neighbouring radio cells C2 to C7.

Messages for allocating or deallocating spectral radio resources are transmitted internally between the radio cells C1, C2, C3 of the first base station BS1, between the radio cells C4, C5 of the second base station BS2, or between the radio cells C6, C7, C8 of the third base station BS3 or are transmitted between a radio cell of one of the base stations BS1, BS2, BS3 and a further radio cell of a further one of the base stations BS1, BS2, BS3 via the inter-node connections BS1 -2, BS1-3, BS2-3, via the connections BS1 -CNN1, BS2-CNN1, BS3-CNN2 or via the intra-core connection CNN1-CNN2.

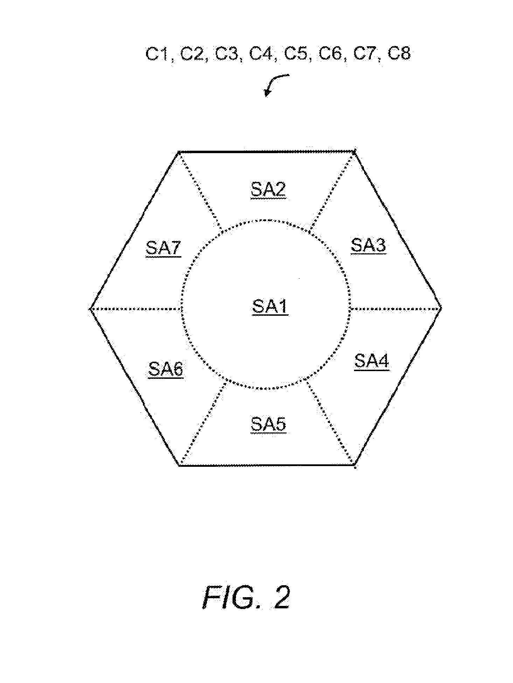

Figure 2 shows schematically in a block diagram the radio cells C1 1 to C8 according to a second embodiment of the invention. The elements in Figure 2 that correspond to elements of Figure 1 have been designated by some reference numerals.

The radio cells C1 to C8 are shown exemplarily as a hexagonal area of radio coverage. The hexagonal area of radio coverage is divided into a plurality of - virtual - sub-areas SA1, SA2, SA3, SA4, SA5, SA6, SA7. In the present example, the radio cells C1 to C8 are divided into a central subarea SA1 and a plurality of six border sub-areas SA2 to SA7 wherein each border sub-area SA2 to SA7 may be arranged adjacent to exactly one neighbouring radio cell. The plurality of the six border sub-areas SA2 to SA7 may be for example overlap areas to neighbouring radio cells. In an alternative, one or several radio sectors may be divided into a plurality of sub-areas. This means, that a sub-area is a fraction of a radio sector and not identical to a radio sector.

Alternatively, the radio cells C1 to C8 may be divided into more or less than seven sub-areas. In particular, a shape and location of the sub-areas SA1 to SA7 may be based e.g. on a geometrical distance to neighbouring radio cells and/or a geographical situation (e.g. rural or urban) al a location of the radio cells and/or on a signal quality at different locations within the radio cells C1 to C8.

The base station BS1 to BS8 may comprise a determining unit which is adapted for determining the one or the several spectral radio resources for one or several of the sub-areas SA1 to SA7 based on one or several cell load related parameters of the one or the several sub-areas SA1 to SA7.

If the radio communication system RCS may be a SON, the one or the several sub-areas SA1 to SA7 may be seli-organized sub-areas.

The determining units of the base stations BS1 to BS8 may be further used to determine one or several working parameters for the one or the several sub-areas SA1 to SA7 such as transmission power parameter, handover parameter, and/or cell preselection parameter.

Thus, a complex self-organization problem according to load balancing among adjacent radio cells can be transformed and reduced to a load balancing among adjacent sub-areas by using fewer cell load related parameters and fewer working parameters as input parameters of an algorithm for the determining of the spectral radio resources and preferably in addition of the working parameters.

Thus, an algorithm - preferably a SON algorithm - performed by the determining unit of the radio cells C1 to C8 of the base stations BS1, BS2, BS3 may allow to operate on the sub-areas SA1 to SA7 only, allowing accelerating the adoption of the resources. Using such a transformation of SON relevant tasks, a complex self organizing problem across many radio cells can be described and handled mathematically in a more simplified way.

It will be understood, however, that resource coordination actions do exist affecting more than one sub-area. For example, the modification of the transmission power of a transceiver unit of one of the base stations BS1 to BS8 affects all of the sub-areas SA2 to SA7 of one of the radio cells C1 to C8 and may also effect the central sub-area SA1. In such a situation, different resource coordination actions performed by one or several radio cells C1 to C8 of the base stations BS1, BS2, BS3 have to be coordinated on a multiple suh-area level or even on a radio cell level.

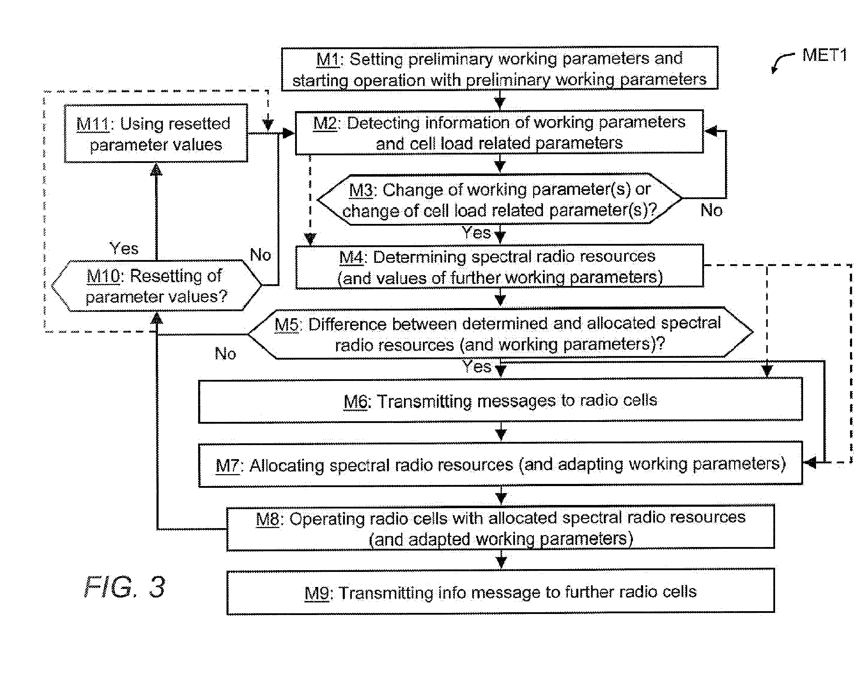

Referring to Figure 3, a block, diagram of a method MET1 according to the first, the second, and further embodiments of the invention is shown.

The sequence and the number of the steps for performing the method MET1 is not critical, and as can be understood by those skilled in the art, that the sequence and the number of the steps may vary without departing from the scope of the invention, e.g. some of the steps may be performed simultaneously or some of the steps are ignored.

The method MET1 is exemplarily described in the following from a perspective of an algorithm of the first radio cell C1 of the first base station BS1 in a distributed, autonomous way, The method MET1 can be used similarly for the radio cells C2, C3 by the first base station BS1, for the radio cells C4 to C8 by the base stations BS2, BS3 in a distributed, autonomous way. This means, that three algorithms for the radio cells C1, C2, C3 may be performed in the first base station BS1 simultaneously.

In an alternative, the method MET1 can be used for the radio cells, C 1 to C8 by the core network nodes CNN1, CNN2 in a centralized, autonomous way.

Autonomous means, that the algorithm does not need any intervention by a network operator of the radio communication system RCS. In a first optional step M1, a static configuration may be set up at the first base station BS1 by setting preliminary working parameters of the first base station BS1 and the first base station BS1 will start its operation with the preliminary working parameters. In an alternative, the first base station BS1 may choose randomly values for the working parameters from a preconfigured preliminary interval of values. The working parameters are for example one or several spectral radio resources, one or several transmission power parameters, one or several handover parameters, and/or one or several cell reselection parameters.

The spectral radio resources are for example grouped contiguous frequency ranges such as FFBs (FFB = fractional frequency band) or PRBs in LTE or with several adjacent OFDM subcarriers, grouped discontiguous frequency ranges for example with non-adjacent OFDM subcarriers, or a single OFDM subcarrier.

The transmission power parameter is for example a transmission power value in dBm or in Watt, which is used by the network node to transmit radio signals to mobile stations.

The handover parameters ore for example signal quality thresholds involved in handover initiation such as a hysteresis value in dB and/or a cell individual offset value in dB and/or a TTT value (TTT = time to trigger) for waiting a specific time, in which the hysteresis value is continuously undercut or passed over.

The cell reselection parameter is for example a received signal power threshold value in dBm at a mobile station, which determines by undercutting the received signal power threshold value, that a mobile station in an idle mode shall perform a cell reselection to a radio cell with a higher received signal power.

In a further step M2, an algorithm of the first radio cell C1 of the first base station BS1 may detect information of a current, dynamic load situation by observing its own cell load related parameters and/or cell load related parameters of the neighbouring radio cells C2 to C7 or C2 to C8 and may detect additionally a current working condition by observing its own working parameters and/or working parameters of the neighbouring radio cells C2 to C7 or C2 to C8. An observation of the current dynamic load situation can be performed in different ways. In a first alternative, the algorithm may verify, if a maximum threshold of its own processing load is exceeded or a minimum threshold of its own processing load is undercut. In a second alternative, the algorithm may verify, if a maximum threshold of its own utilized spectral radio resources is exceeded or a minimum threshold of its own utilized spectral radio resources is undercut. In a third alternative, the algorithm may receive an information message preferably as a response to a previous request or as a periodic reporting from one or several of the neighbouring radio cells C2 to C7 or C2 to C8 about a current lood situation at the one or the several of the neighbouring radio cells C2 to C7 or C2 to C8. by inserting information about one or several of the cell lood related parameters or about a current working condition at the one or the several of the neighbouring radio cells C2 to C7 or C2 to C8 by inserting further information about one or several working parameters currently used at the one or the several of the neighbouring radio cells C2 to C7 or C2 to C8. Preferably, the information message is an information message being standardized by a standardization organization such as 3GPP for being able to use base stations of different manufacturers for the method MET1. In an alternative cell load related status information and/or status information of working parameters may be exchanged via private messages for being able to use the method MET1 between base stations of a some manufacturer. In a fourth alternative, the algorithm may receive a command message or a suggestion message from one of the neighbouring radio cells C2 to C7 or C2 to C8 for changing one or several working parameters. In a fifth alternative, the first base station BS1 may measure via its antenna system a spectral occupancy of any spectral radio resources or an appearance of any interference signals and this information may be detected by the algorithm.In a sixth alternative, the first base station BS1 may receive from the mobile stations MS1, MS2, MS3 measurement results according to the spectral occupancy of spectral radio resources or an appearance of any interference signals and this further information may be detected by the algorithm. In a seventh alternative, the algorithm may generate a periodic trigger or receive a periodic trigger from one of the neighbouring radio cells C2 to C7 or C2 to C8 to perform a next step M3 or a next step M4.

One or several of the alternatives given above may be used simultaneously as trigger events to perform the next step M3 or the next step M4. In the next optional step M3, the algorithm may verify, if one or several of the cell load related parameters and/or one or several of the working parameter have been changed preferably above a specific threshold for avoiding an unnecessary processing of further steps M4 to M1

The step M2 may follow the step M3, until a change is versified or until one or several of the trigger events of the step M2 happens.

In the next step M4, the algorithm determines one or several of the spectral radio resources SRR1 to SRR7 for the first radio cell C1 and one further or several further of the spectral radio resources SRR1 to SRR7 for one or several of the neighbouring radio cells C2 to C7 or C2 to C8 (see example of Figure 1), preferably in a semi-static time frame (typically e.g, within seconds or within minutes).

The algorithm may be for example an iterative optimisation algorithm, which may not analyse a complete search tree of all possible solutions like in a complete backtracking or brute force search. The algorithm may for example go along a most likely search path and then uses a first found solution fulfilling a predefined criteria (e.g. a specific improvement according to a current load situation). In further alternatives, the algorithm may use gradient driven methods, wherein parameters are optimized independently, may use iterative driven methods, wherein a first calculated parameter solution is further optimized, may use a neural network, may use a simulated annealing, or may use a combination of the above methods. In an even further alternative, the first base station BS1 may additionally determine one or several values of one or several working parameters of the first radio cell C1 and/or one or several values of one- or several working parameters of the neighbouring radio cells C2 to C7 or C2 to C8. The working parameters may be for example the transmission power parameters, the handover parameters, or the cell reselection parameters, In two further alternatives, the spectral radio resources SRR1 to SRR7 and/or the several values may be determined instead of a fixed value with a value range or a value array.

In a preferred alternative, the algorithm may determine the one or several spectral radio resources SSR1 to SRR7 and the one or several working parameters in a sequential way. The algorithm may for example determine iteratively in a first sub-step the one or several of the spectral radio resources SSR1 to SRR7 until a first improvement between successive iteration steps is below a first predefined threshold or until a first predefined number of iterations have been done. Then in a second sub-step, the algorithm may determine iteratively the one or several values of the one or several working parameters until a second improvement between further successive iteration steps is below a second predefined threshold or until a second predefined number of iterations have been done.

In a further alternative, an order of the first and the second sub-step may be reversed.

In a further preferred alternative, the algorithm may detect a change of one or several cell load related parameters and/or one or several working parameters during the determining step M4 and the determining step M4 preferably is continued using the changed one or several cell load related parameters and/or the changed one or several working parameters, In a further alternative, the determining step M4 may be restarted using the changed one or several cell load related parameters and/or the changed one or several working parameters.

In a next optional step M5, the algorithm may compare the determined one or several spectral radio resources with currently allocated and used spectral radio resources and/or may compare the determined one or several values of the working parameters with the currently used venues of the working parameters. If there are no differences or only differences equal to or below a predefined threshold, the algorithm may continue the method MET1 with a next optional step M10. In alternative, even if there are no differences or only differences below a predefined threshold, the algorithm may continue the method MET1 with either further step M6 and/or further step M7.

If there are differences above the predefined threshold, the algorithm may continue the method MET1 with either the further step M6 and/or the further step M7,

In an alternative, the further steps M6, M7 follow directly after the step M4. In the further step M6, the algorithm may transmit a first message for allocating the determined spectral radio resources SRR6 to the third radio cell C3 and a second message for deallocating the spectral radio resources SSR5, SSR7 to the fourth radio cell C4. In an alternative, the algorithm may transmit in the first message or in a further first message additionally the determined one or several values of the one or several working parameters of the third radio cell C3 and in the second message or in a further second message additionally the determined one or several values of the one or several working parameters of the fourth radio cell C4.

In the further step M7, the algorithm of the first radio cell C1 allocates the spectral radio resource SPR7 and preferably adapts the one or several working parameters of the first radio cell C1 with the determined one or several values. Additionally, an algorithm of the third radio cell C3 may allocate the spectral radio resource SRR6 and preferably adapts the one or several working parameters of the third radio cell C3 with the determined one or several values and an algorithm of the fourth radio cell C4 may deallocate the spectral radio resources SRR6, SRR7 and preferably adapts the one or several working parameters of the fourth radio cell C4 with the determined one or several values.

In a next step M8, the algorithm of the first radio cell C1 operates the first radio cell C1 with the allocated spectral radio resources SRR1, SRR2, SRR7 and preferably in addition with the adopted working parameters of the first radio cell C1. Additionally, the algorithm of the third radio cell C3 operates the third radio cell C3 with the allocated spectral radio resources SRR3, SRR4, SRR6 and preferably in addition with the adapted working parameters of the third radio cell C3 and the algorithm of the fourth radio cell C4 operates the fourth radio cell C4 with the allocated spectral radio resource SRR5 and preferably in addition with the adapted working parameters of the fourth radio cell C4.

ln a next optional step M9, the algorithms of the first radio cell C1 the third radio cell C3, and/or the fourth radio cell C4 may transmit in further messages information of the allocated one or several spectral radio resouces and/or the deallocated one or several spectral radio resources to algorithms of the radio cells C2, C5, C6, C7 or C2, C5, C6, C7, C8.

In the further-optional step M10, the algorithm of the first radio cell C1 may verify, if one or several spectral radio resources of the first radio cell C1 and/or one or several values of the working parameters of the first radio cell C1 have been reset for example remotely via an OMC. This would be done for example, if one or several of the neighbouring radio cells C2 to C8 may be switched off for a certain time because of a maintenance procedure or if one or several new neighbouring radio cells have been installed additionally.

If no spectral radio resources and/or values of the one or the several working parameters of the first radio cell C1 have been reset, the step M2 may be the next step. If one or several spectral radio resources and/or one or several values of the one or the several working parameters of the first radio cell C1 have been reset, the algorithm of the first radio cell C1 may use the one or the several reset spectral radio resources and/or the one or the several reset values of the working parameters in a next step M11.

The reset of the one or the several spectral radio resources and/or the one or the several values of the one or the several working parameters may provide an internal trigger for the algorithm of the first radio cell C1 to continue the method MET1 with the next step M3,

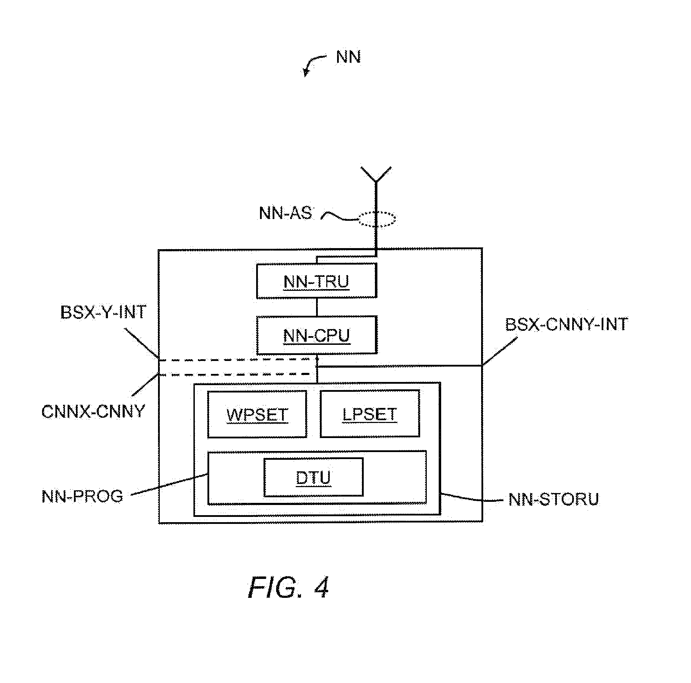

Referring to Figure 4, a block diagram of a network node NN according to the first, the second, and the further embodiments of the invention is shown. The elements in Figure 4 that correspond to elements of Figure 1 have been designated by some reference numerals.

The network node NN may be for example one of the base stations BS1, BS2, BS3 or one of the core network nodes CNN1, CNN2.

If the network node NN is a base station, the network node NN may comprise an antenna system NN-AS, a transceiver unit NN-TPU for the antenna system NN-AS, one or several interfaces BSX-Y-INT being adapted to connect the network node NN to one or several further base stations via the inter-node connections BS1-2, BS1-3, BS2-3, and/or one or several interfaces BSX-CNNY-INT being adapted to connect the network node NN to one or several core network nodes via the core network connections BS1-CNN1, BS2-CNN1, BS3-CNN2. If the base station serves more than one radio cell or more than one radio sector, the base station may comprise more than one antenna system and more than one transceiver unit for the more than one antenna system.

If the network node NN is a core network node, the network node NN may comprise one or several interfaces BSX-CNNY-INT being adapted to connect the network node NN to one or several base stations via the core network connections BS1-CNN1, BS2-CNN1, BS3-CNN2, and one or several interfaces CNNX-CNNY being adapted to connect the network node NN to one or several further core network nodes via the intra-core network connection CNH1 -CNN2.

The one or the several interfaces BSX-CNNY-INT and BSX-Y-INT or CNNX-CNNY may be used for transmitting one or several messages for allocating one or several spectral radio resources and/or for deallocating one or several further spectral radio resources and/or for adapting one or several values of one or several working parameters to one or several radio cells of one or several base stations. Furthermore, the one or the several interfaces BSX-CNNY-INT and BSX-Y-INT or CNNX-CNNY may be used for transmitting one or several further messages with information of the one or the several allocated spectral radio resources and/or of the one or the several further deallocated spectral radio resources and/or of the one or the several adapted values of the one or the several working parameters to one or several further radio cells of one or several further base stations. The transceiver unit NN-TRU and the antenna system NN-AS may be used to measure the spectral occupancy of any radio resources or the appearance of any interference signals as load indicators. Alternatively, the transceiver unit NN-TRU and the antenna system NN-AS may be used to receive measurement reports from attached mobile stations MSI to MS6 about the spectral occupancy of any spectral radio resources SRR1 to SRR7 or the appearance of any interference signals as load indicators.

The network node NN may further comprise a central processing unit NN-CPU and a storage unit NN-STORU for performing an adaptation of resources in a radio cell or in a radio sector. In an alternative, the network node NN may comprise the central processing unit NN-CPU and the storage unit NN-STORU for performing an adaptation of resources in two or more radio cells or in two or more radio sectors. In a further alternative, the network node NN may comprise two or more central processing units and preferably two or more storage units for performing the adaptation of resources in the two or more radio cells or in the two or more radio sectors. If the network node NN may comprise a first central processing unit and a first storage unit for performing an adaptation of resources in a first radio cell or in a first radio sector and if the network node NN may further comprise a second central processing unit and a second storage unit for performing an adaptation of resources in a second radio cell or in a second radio sector, a network node internal communication for transmitting messages for allocating one or several spectral radio resources, for transmitting messages for adapting one or several working parameters, and/or for transmitting messages with information of one or several allocated spectral radio resources may be used.

The storage unit NN-STORU is foreseen for storing a computer readable program NN-PROG and alternatively in addition a working parameter set WPSET and a cell load related parameter set LPSET.

The storage unit NN-STORU may be for example a card, a tape, a compact disk, a flash memory, a hard disk, a circuitry with non-volatile RAM, a circuitry with volatile RAM.

The computer readable program NN-PROG is foreseen for executing the steps of the method MET1 according to the embodiments of the invention and the central processing unit NN-CPU is foreseen for executing the computer readable program NN-PROG.

The computer readable program NN-PROG may comprise a software-based determining unit DTU. In an alternative, the determining unit DTU may be partly software-based and partly hardware-based.

The determining unit DTU may be adapted for determining one or several of the spectral radio resources SRR1 to SRR7 for one or several of the radio cells C1 to C8 of the radio communication system RCS based on one or several of the cell load related parameters. Preferably, the determining unit DTU may be further adapted for determining one or several values of one or several of the working parameters for one or several of the radio cells C1 to C8 based on one or several of the cell load related parameters and/or based on one or several currently used values of one or several of the working parameters.

The determining unit DTU may preferably work in a self-organized, autonomous way preferably with an iterative optimisation algorithm, The determining of the one or the several values of the working parameters may result for example in a modification of a transmission power of one or several of the radio cells C1 to C8, in a modification of one or several hanover parameters between one or several pairs of the radio cells C1 to C8, and/or in a modification of one or several cell reselection parameters of one or several of the radio cells C1 to C8.

The working parameter set WPSET may comprise one or several currently used values of one or several working parameters such as transmission power parameter, handover parameter, cell reselection parameter, and/or spectral radio resource of one or several radio cells C1 to C8. The working parameter set WPSET may be updated by the method MET1.

The load parameter set LPSET may comprise one or several cell load related parameters such as radio capacity parameter, radio load parameter, processing capacity parameter processing load parameter, network load parameter, used spectral radio resources, unused spectral radio resources of one or several radio cells C1 to C8. The load parameter set LPSET may be updated by the method MET1.

The functions of the various elements shown in Figure 4, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, DSP hardware (DSP = digital signal processor), network processor, ASIC (ASIC = application specific integrated circuit), FPGA (FPGA = field programmable gate array), ROM (ROM = read only memory) for storing software, RAM (RAM = random access memory), and non volatile storage. Other hardware, conventional and/or custom, may also be included.

## Claims

1. A method for adaptation of resources in a radio communication system (RCS), said method comprising the step of determining (M4) at least one first spectral radio resource (SRR1, ..., SRR7) fora first radio cell (C1, ..., C8) of said radio communication system (RCS) and at least one second spectral radio resource (SRR1, ..., SRR7) for at least one second radio cell (C1, ..., C8) of said radio communication system (RCS) based on at least one cell load related parameter, and
wherein said method further comprising the steps of allocating (M7) said at least one first spectral radio resource (SRR1, ..., SRR7) to said first radio cell (C1, ..., C8), if said at least one first spectral radio resource (SRR1, ..., SRR7) being different to an allocated at least one further first spectral radio resource (SRR1, ..., SRR7) of said first radio cell (C1, ..., C8) and/or allocating (M7) said at least one second spectral radio resource (SRR1, ..., SRR7) to said at least one second radio cell (C1, ..., C8), if said at least one second spectral radio resource (SRR1, ..., SRR7) being different to an allocated at least one further second spectral radio resource (SRR1, ..., SRR7) of said at least one second radio cell (C1, ..., C8),

2. Method according to claim 1, wherein said determining step (M4) being performed for at least one subarea (SA1, ..., SA7) of said first radio cell (C1, ..., C8) and/or said at least one second radio cell (C1, ..., C8).

3. Method according to any of the preceding claims, wherein said method further comprising the step of detecting a change of said at least one cell load related parameter during said determining step (M4) and wherein said determining step (M4) being continued using said changed at least one cell load related parameter.

4. Method according to any of the preceding claims, wherein at least one first value of at least one first working parameter being used at said first radio cell (C1, ..., C8) and at least one second value of at least one second working parameter being used at said at least one second radio cell (C1, ..., C8), said determining step (M4) further determines at least one further first value of said at least one first working parameter and/or at least one further second value of said at least one second working parameter, and said method further comprises the step of adapting (M7) said at least one first working parameter with sold at least one further first value, if said at least one further first value being different to said at least one first value and/or adapting (M7) said at least one second working parameter with said at least one further second value, if said at least one further second value being different to said at least one second value and wherein said at least one first working parameter and said at least one second working parameter are either of the following type: transmission power parameter, handover parameter, cell reselection parameter.

5. Method according to claim 4, wherein said detemining step (M4) determines in a first sub-step said at least one first spectral radio resource SRR1, ..., SRR7) and said at least one second spectral radio resource (SRR1, ..., SRR7) and in of least one second sub-step said at least one further first value and/or said at least one further second value or determines in said first sub-step said of least one further first value and/or said at least one further second value and in said at least one second sub-step said at least one first spectral radio resource (SRR1, ..., SRR7) and said at least one second spectral radio resource (SRR1, ..., SRR7).

6. Method according to any of the preceding claims, wherein said at least one cell load related parameter is either of the following: radio capacity parameter, radio load parameter, processing capacity parameter, processing load parameter, network load parameter, used spectral radio resource (SRR1, ..., SRR7), unused spectral radio resource (SRR1, ..., SRR7).

7. Method according to any of the preceding claims, wherein said method further comprising the steps of:
- transmitting (M6) to said first radio cell (C1, ..., C8) a first message for allocating said at least one first spectral radio resource (SRR1, ..., SRR7) and/or deallocoting said at least one further first spectral radio resource (SRR1, ..., SRR7), and/or
- transmitting (M6) to said at least one second radio cell (C1, ..., C8) at least one second message for allocating said at least one second spectral radio resource (SRR1, ..., SRR7) and/or deallocating said at least one further second spectral radio resource (SRR1, ..., SRR7), and
- operating (M8) said first radio cell (C1, ..., C8) with said allocated at least one first spectral radio resource (SRR1, ..., SRR7), and/or
- operating (M8) said at least one second radio cell (C1, ..., C8) with said allocated at least one second spectral radio resource (SRR1, ..., SRR7).

8. Method according to any of the preceding claims, wherein said method further comprising the steps of transmitting (M9) a third message with information of said allocated at least one first spectral radio resource (SRR1, ..., SRR7) and/or said deallocated at least one further first spectral radio resource (SRR1, ..., SRR7) from said first radio cell (C1, ..., C8) to at least one further radio cell (C1, ..., C8), and/or transmitting (M9) a fourth message with information of said allocated at least one second spectral radio resource (SRR1, ..., SRR7) and/or said deallocated at least one further second spectral radio resource (SRR1, ..., SRR7) from said at least one second radio cell (C1, ..., C8)to said at least one further radio cell (C1, ..., C8).

9. Method according to any of the preceding claims, wherein said method being performed in a distributed way or in a centralized way.

10. A network node (NN, BS1, BS2, BS3, CNN1, CNN2) for adaptation of resources in a radio communication system (RCS), said network node (NN, BS1, BS2, BS3, CNN1, CNN2) comprising means for determining (DTU) at lead one first spectral radio resource (SRR1, ..., SRR7) for a first radio cell (C1, ..., C8) of said radio communication system (RCS) and at least one second spectral radio resource (SRR1, ..., SRR7) for at least one second radio cell (C1, ..., C8) of said radio communication system (RCS) based on at least one cell load related parameter, and wherein said network node (NN, BS1, BS2, BS3, CNN1, CNN2) further comprising means for allocating (NN-CPU, NN-PROG) said at least one first spectral radio resource (SRR1, ..., SRR7) to said first radio cell, if said at least one first spectral radio resource (SRR1, ..., SRR7) being different to an allocated at least one further first spectral radio resource (SRR1, .., SRR7) of said first radio cell (C1, ..., C8) and/or means for allocating (NN-CPU, NN-PROG) said at least one second spectral radio resource (SRR1, ..., SRR7) to said at least one second radio cell (C1, ..., C8), if said at least one second spectral radio resource (SRR1, ..., SRR7) being different to an allocated at least one further second spectral radio resource (SRR1, ..., SRR7) of said at least one second radio cell (C1, ..., C8).

11. Network node (NN, BS1, BS2, BS3) according to claim 10, wherein said network node (NN, BS1, BS2, BS3) is a base station and wherein said network node (NN, BS1, BS2, BS3) further comprising said first radio cell (C1, ..., C8) and/or said at least one second radio cell (C1, ..., C8).

12. A radio communication system (RCS) comprising at least one network node (NN, BS1, BS2, BS3, CNN1, CNN2) according to claim 10 or claim 11.

13. Radio communication system (RCS) according to claim 12, wherein a predefined area of said radio communication system (RCS) comprises said at least one second radio cell (C1, ..., C8).

14. Radio communication system (RCS) according to claim 12 or claim 13, wherein a number of said of least one second radio cell (C1, ..., C8) is below a predefined threshold.
